# EUROPÄISCHE PATENTSCHRIFT

(11) **EP 3 504 516 B1**
(45) Veröffentlichungstag und Bekanntmachung des Hinweises auf die Patenterteilung: **10.03.2021**
(21) Anmeldenummer: 17743003.0
(22) Anmeldetag: 17.07.2017
(51) Int. Cl.: G01D 5/347

(54) **DREHSCHALTER FÜR EIN KRAFTFAHRZEUG**
ROTARY SWITCH FOR A MOTOR VEHICLE
COMMUTATEUR ROTATIF POUR UN VÉHICULE AUTOMOBILE

(30) Priorität: 23.08.2016 DE 102016215789
(43) Veröffentlichungstag der Anmeldung: 03.07.2019
(73) Patentinhaber: ZF Friedrichshafen AG, 88046 Friedrichshafen (DE)
(72) Erfinder: KIRILENKO, Alexander, 49356 Diepholz (DE); HESSEL, Alex, 49448 Lemförde (DE); AUMANN, Torsten, 49406 Drentwede (DE)
(74) Vertreter: ZF Friedrichshafen AG
(86) Internationale Anmeldenummer: PCT/EP2017/067983
(87) Internationale Veröffentlichungsnummer: WO 2018/036721

(56) Entgegenhaltungen:
- EP-A1- 1 637 843
- EP-A1- 1 731 876
- DE-A1-102013 224 258
- US-A- 5 418 362
- US-A1- 2006 169 879

## Beschreibung

Die Erfindung betrifft ein Drehschalter für ein Kraftfahrzeug mit einer Drehstellungserfassungsvorrichtung, wobei die Drehstellungserfassungsvorrichtung zumindest ein erstes lichtbasiertes Sender-/Empfänger Paar, ein zweites lichtbasiertes Sender-/Empfänger Paar und ein Lichtblendeelement aufweist, wobei die lichtbasierte Sender-/Empfänger Paare jeweils einen Lichtsender und einen gegenüber von dem Lichtsender angeordneten Lichtempfänger aufweisen, so dass jeweils eine Lichtübertragungsstrecke zwischen dem Sender und dem Empfänger gebildet ist, wobei das Lichtblendeelement dazu dient, die Transmissionseigenschaften der jeweiligen Lichtübertragungsstrecken anhand der Drehstellung des Drehschalters zu bestimmen.

Ein Drehschalter dieser Art ist in der deutsche Patentschrift DE102013224258A1 beschrieben. Dieser Drehschalter weist ein Lichtblendeelement auf, das als kreisförmige Wandung die Drehachse des Drehschalters umkreist. Diese Wandung weist Ausnehmungen auf, die je nach Drehstellung des Drehschalters Lichtsignale von Lichtschranken durchlassen oder blockieren. Die Drehstellung des Drehschalters wird somit anhand der von den Lichtschranken erzeugten elektrischen Signale ermittelt.

Bei solchen Drehschaltern ist es üblich die Sender-/Empfänger Paare direkt an einer Leiterplatte zu montieren, um aufwändige Verkabelungen und andere fertigungstechnische Komplikationen zu vermeiden. Die Leiterplatte muss somit die Fläche, die vom Blendeelement eingenommen wird, spiegeln bzw. überdecken, sodass die Sender-/Empfänger Paare, beispielsweise Lichtschränke, entsprechend platziert werden können. Somit muss die Leiterplatte entweder formpassend zugeschnitten oder größer als notwendig, wäre für die übliche Menge von elektrische und/oder elektronische Bauteilen, die zur Funktion des Drehschalters benötigt werden, hergestellt werden. Sowohl das Zuschneiden als auch das Verschwenden von Leiterplattenflächen stellen einen wirtschaftlichen Verlust dar. Weiterhin benötigen solche Leiterplatten mehr Bauraum.

Somit ist es die Aufgabe der Erfindung einen Drehschalter vorzustellen, der die Leiterplattenfläche effizienter benutzt, bzw. eine kompaktere Konstruktion aufweist.

Die Aufgabe wird durch einen Drehschalter nach Anspruch 1 gelöst. Vorteilhafte Weiterbildungen sind Gegenstand der abhängigen Ansprüche.

Somit wird die Aufgabe mit einem Drehschalter für ein Kraftfahrzeug mit einer Drehstellungserfassungsvorrichtung gelöst, wobei die Drehstellungserfassungsvorrichtung zumindest ein erstes lichtbasiertes Sender-/Empfänger Paar, ein zweites lichtbasiertes Sender-/Empfänger Paar und ein Lichtblendeelement aufweist, wobei die lichtbasierte Sender-/Empfänger Paare jeweils einen Lichtsender und einen gegenüber von dem Lichtsender angeordneten Lichtempfänger aufweisen, so dass jeweils eine Lichtübertragungsstrecke zwischen dem Sender und dem Empfänger gebildet ist, wobei das Lichtblendeelement dazu dient, die Transmissionseigenschaften der jeweiligen Lichtübertragungsstrecken anhand der Drehstellung des Drehschalters zu bestimmen, wobei die Sender-/Empfänger Paare so angeordnet sind, dass ein erster Abstand, der sich zwischen einem Mittepunkt der ersten Lichtübertragungsstrecke des ersten Paares und einer Drehachse des Drehschalters erstreckt, von einem zweiten Abstand, der sich zwischen einem Mittepunkt der zweiten Lichtübertragungsstrecke des zweiten Paares und der Drehachse, sich unterscheidet.

Unter einem Drehschalter kann beispielsweise ein Drehschalter zum Wählen einer Übersetzungsstufe eines Fahrzeuggetriebes verstanden werden. Ein lichtbasierter Sensor kann beispielsweise eine lichtemittierende Diode sein. Ein lichtbasierter Empfänger kann beispielsweise ein Fototransistor sein. Ein Sender-/Empfänger Paar kann als Lichtschranke ausgestaltet sein. Die Lichtübertragungsstrecke kann durch eine Drehstellungsänderung des Drehschalters eine optische Änderung aufweisen. Die Drehstellungserfassungsvorrichtung dient dazu eine Stellung des Drehschalters zu erfassen.

Der Drehschalter kann somit so gestaltet werden, dass die Leiterplatte nur ein Bruchteil der Fläche des Lichtblendeelementes abdeckt bzw. spiegeln muss, weil die Sender-/Empfänger Paare versetzt oder hintereinander eingebaut bzw. platziert werden können. Dies ermöglicht eine Flexibilität und Variabilität in der Gestaltung eines Leiterplattenlayouts für einen Drehschalter. Dies führt somit zu Kostensparnisse und fertigungstechnische Vereinfachungen.

Das Lichtblendeelement kann dazu ausgestaltet sein, ein vom jeweiligen Sender entlang der jeweiligen Lichtübertragungsstrecke gesendetes Lichtsignal, je nach Stellung des Drehschalters bei einem jeweils unterschiedlichen Abstand von der Drehachse zu verhindern oder durchzulassen bzw. die Lichtübertragungsstrecke zu unterbrechen oder frei zu lassen. In anderen Worten dient in einer ersten Stellung des Drehschalters die Lichtübertragungsstrecke dazu ein Lichtsignal von dem Sender an den Empfänger zu übertragen, und in einer zweiten Stellung des Drehschalters dient das Lichtblendeelement dazu die Lichtübertragungstrecke zu blockieren, um die Übertragung des Lichtsignals vom Sender zum Empfänger zu verhindern.

Erfindungsgemäß ist der Drehschalter so ausgestaltet, dass das Lichtblendeelement eine erste konzentrisch zu der Drehachse des Drehschalters angeordnete Blendewandung aufweist, wobei die Blendewandung zumindest teilweise die Drehachse einkreist, und dazu dient die Transmissionseigenschaft der ersten Lichtübertragungsstrecke des ersten lichtbasierten Sender-/Empfänger Paares je nach Drehstellung zu bestimmen, wobei das Lichtblendeelement eine zweite konzentrisch zu der Drehachse des Drehschalters angeordnete Blendewandung aufweist, wobei die zweite Blendewandung zumindest teilweise die Drehachse einkreist, und im Vergleich zu der ersten Blendewandung unterschiedlich von der Drehachse entfernt angeordnet ist, und dazu dient die Transmissionseigenschaft der zweiten Lichtübertragungsstrecke des zweiten lichtbasierten Sender-/Empfänger Paares je nach Drehstellung zu bestimmen.

Die konzentrisch zu der Drehachse angeordneten Blendewandungen können unterschiedliche Muster von Transmission bestimmende Bereiche aufweisen, sodass in bestimmte Drehstellungen, die Transmissionseigenschaften von den einzelnen Lichtübertragungsstrecken unterschiedlich bestimmt werden.

In einer vorteilhaften Ausgestaltung des Drehschalters ist das Lichtblendeelement relativ beweglich zu den lichtbasierten Sender-/Empfänger Paaren angeordnet, wobei die Relativbewegung eine Rotationsbewegung ist.

In einer Ausgestaltung des Drehschalters sind das erste Sender-/Empfänger Paar und das zweite Sender-/Empfänger Paar entlang unterschiedlich radialen Richtungen in Bezug auf die Drehachse angeordnet. Die Sender-/Empfänger Paare können somit gestaffelt angeordnet werden, wobei beispielsweise der radiale Abstand von einem ersten Empfänger zu der Drehachse des radialen Abstands des zweiten Senders entspricht. Somit können die Sender-/Empfänger Paare gestaffelt angeordnet werden, wobei die Möglichkeit, dass ein Störsignal von einem ersten oder zweiten Sender an den zweiten oder ersten Empfänger ankommt, ausgeschlossen ist. Der Drehschalter kann somit kompakt ausgestaltet werden, und die Leiterplattenfläche kann entsprechend effizient verwendet werden, ohne dass die sichere Funktionsweise beeinträchtigt wird.

In einer Ausgestaltung des Drehschalters ist das erste Sender-/Empfänger Paar im Wesentlichen radial zwischen dem zweiten Sender-/Empfänger Paar und der Drehachse angeordnet. Somit kann die Leiterplattenfläche gering gehalten werden, weil ein kleinstmöglicher Winkelbereich des Drehschalters abgedeckt werden muss.

In einer Ausgestaltung des Drehschalters weist mindestens einer der Blendewandungen abschnittsweise unterschiedliche Transmissionseigenschaften auf, insb. wobei die mindestens eine Blendewandung alternierend lichtdurchlässige Abschnitte und lichtundurchlässig Abschnitte aufweisen, wobei die Abschnitte dazu dienen die Transmissionseigenschaften der jeweiligen Lichtübertragungsstrecken entsprechend verschiedene Drehstellungen zu beeinflussen. Dabei ist die Blendewandung so angeordnet, dass bei einer Rotationsbewegung des Lichtblendeelements um die Drehachse, dass die Abschnitte der Blendewandung, welche unterschiedliche Transmissionseigenschaften aufweisen, die Lichtübertragungsstrecke überkreuzen. Somit überkreuzen beispielsweise die lichtdurchlässigen und lichtundurchlässigen Abschnitte die Lichtübertragungsstrecke in Wechselfolge.

In einer Weiterbildung ist das Lichtblendeelement ausgestaltet um die Transmissionseigenschaften der jeweiligen Lichtübertragungsstrecken zu bestimmen, in dem die erste und zweite Blendewandungen die Lichtübertragungsstrecken anhand der Drehstellung so blockieren oder freilassen, dass jede Drehstellung anhand einer eindeutigen Kombination von geöffneten oder blockierten Lichtübertragungsstrecken identifizierbar ist.

In einer ersten Drehstellung des Drehschalters kann also ein erster Abschnitt mit einer ersten Transmissionseigenschaft zwischen dem Sender und dem Empfänger angeordnet sein. In einer zweiten Drehstellung des Drehschalters kann ein zweiter Abschnitt mit einer zweiten Transmissionseigenschaft zwischen dem Sender und dem Empfänger angeordnet sein. Durch die unterschiedliche Transmissionseigenschaften kann beispielsweise in der ersten Drehstellung Licht mit einer hohen Intensität auf den Empfänger fallen, während Licht in der zweiten Drehstellung mit einer niedrigen Intensität auf den Empfänger fällt. Dadurch ist eine eindeutige Unterscheidung der Drehstellungen möglich. Insbesondere können die elektrischen Signale der Empfänger eindeutig je einer Drehstellung zuordenbare Signalmuster aufweisen. Die erste Transmissionseigenschaft kann beispielsweise lichtdurchlässig sein und die zweite Transmissionseigenschaft lichtundurchlässig. Somit hat der erste Abschnitt eine fensterähnelnde Funktionsweise, wobei die Lichtübertragungstrecke in die erste Drehstellung hindernisfrei ausgestaltet ist.

Es ist weiterhin denkbar einen dritten Abschnitt mit einer dritten, von der ersten und zweiten unterschiedlichen, Transmissionseigenschaft vorzusehen.

In einer Weiterbildung ist jede eindeutige Kombination mit einer Bitfolge repräsentierbar, wobei der Hamming-Abstand zwischen den jeweiligen, kombinationsrepräsentierenden Bitfolgen einen Wert von mindestens 2 beträgt.

Durch eine Matrixform in Zeilen und Spalten kann eine Vielzahl von Drehstellungen als Vektoren repräsentiert werden. Die kombinationsrepräsentierenden Bitfolgen können in einer Auswerteeinheit hinterlegt werden. Die elektrischen Signale der Empfänger können in digitalen Werten mittels einem A/D-Wandler umgewandelt werden und mit den hinterlegten Bitfolgen in der Auswerteeinheit verglichen werden, um eine aktuelle Drehstellung zu ermitteln.

In einer vorteilhaften Ausgestaltung ist der lichtbasierte Sender dazu ausgelegt ein Infrarot Lichtsignal zu senden und der lichtbasierte Empfänger ist dazu ausgelegt das Infrarot Lichtsignal zu empfangen. Eine optische Drehstellungserfassung kann somit vorteilhafterweise berührungslos ausgeführt sein.

Bei dem hier vorgestellten Ansatz wird Licht, insbesondere Infrarotlicht zum Erkennen der Drehstellung des Drehschalters verwendet. Das Licht kann auf engem Raum große Intensitätsschwankungen aufweisen, wodurch eine scharfe Abgrenzung zwischen einzelnen Drehstellungen erreicht werden kann.

In einer vorteilhaften Ausgestaltung ist der Drehschalter in einer Vorrichtung für die Wahl eines Ganges in einem Kraftfahrzeug integriert.

Eine Vorrichtung kann ein elektrisches Gerät sein, das elektrische Signale, beispielsweise die Empfängersignale, verarbeitet und in Abhängigkeit davon Steuersignale ausgibt. Die Vorrichtung kann eine oder mehrere geeignete Schnittstelle aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Die Flexibilität der oben vorgestellte Drehschalter ermöglicht einem hohen Sicherheitsgrad der Drehstellungserfassung, insbesondere durch eine Ausgestaltung, in der den Hamming-Abstand zwischen die Codierung von einzelnen Drehstellungen mindestens zwei beträgt. Ein solcher Drehschalter eignet sich besonders für die Anwendung in einer Vorrichtung zur Gangwahl, denn dies benötigt ein von einer Sicherheitsstandards-Organisation definierte Sicherheitsniveau (Safety Integrity Level).

Die Erfindung wird anhand der beigefügten Zeichnungen beispielhaft näher erläutert. Es zeigen:
Fig. 1: eine Perspektivsicht einer Ausgestaltung eines Drehschalters nach der Erfindung;
Fig. 2: eine Perspektivsicht der inneren Aufbau der in Fig. 1 gezeigten Ausgestaltung;
Fig. 3a, b, c: eine Draufsicht einer Ausgestaltung eines Drehschalters in einer ersten, zweiten und dritten Drehstellung sowie Wertetabellen, die die jeweilige Drehstellungauswahl anhand die jeweilig Empfängersignale aufzeigen.

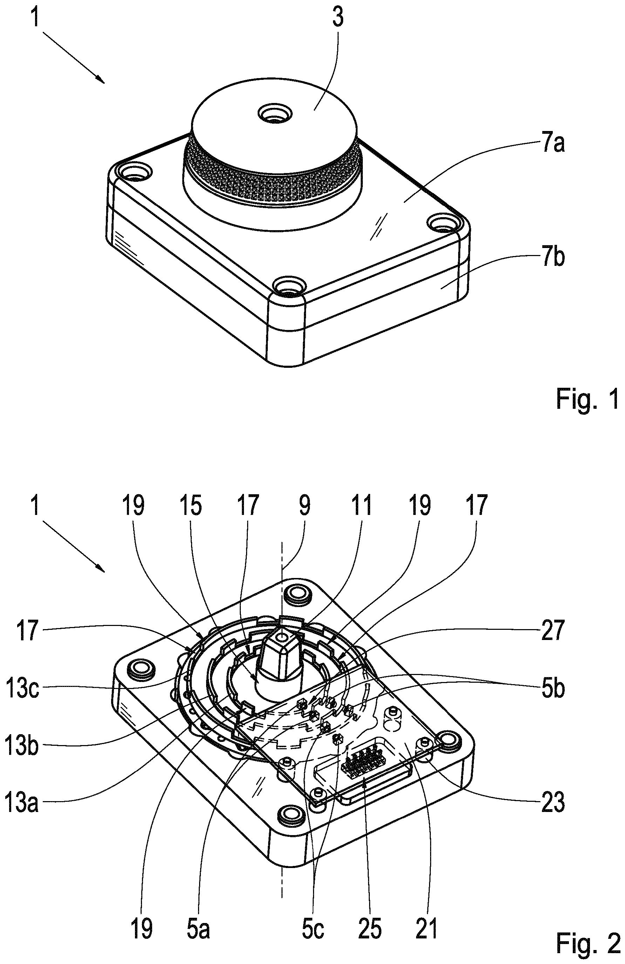

Fig. 1 zeigt eine Perspektivsicht einer Ausgestaltung eines Drehschalters 1 nach der Erfindung. Der Drehschalter 1 weist einen Knauf 3 auf. Der Knauf 3 kann gedreht werden um eine Auswahl durchzuführen. Der Drehschalter 1 weist weiterhin ein Gehäuse 7 auf. Das Gehäuse 7 besteht aus zwei Teilen 7a, 7b. Solche Drehschalter 1 werden im Automobilbereich eingesetzt, beispielsweise um die Lautstärke zu justieren oder um einen Gang P, R, N, D auszuwählen.

Fig. 2 zeigt eine Perspektivsicht des Innenaufbaus des in Figur 1 gezeigten Drehschalters 1, wobei der erste Teil des Gehäuses 7a abmontiert ist. In der Mitte des Drehschalters 1 bzw. entlang der Drehachse 9 des Drehschalters 1 ragt ein Kunststoffteil 11 aus, der dazu dient, eine Verbindung mit dem Knauf 3 herzustellen. Konzentrisch um diese Drehachse 9 sind mehrere Ringe 13a, b, c angeordnet. Diese Ringe 13a, b, c insgesamt bilden ein Lichtblendeelement 15. Die jeweiligen Ringe 13a, b, c sind als Blendewandungen ausgestaltet, wobei jeder Blendewandung 13 Ausnehmungen 17 aufweist. Diese Blendewandungen 13 bzw. das Lichtblendeelement 15 wird mit dem Drehknauf 3 gedreht bzw. mitgenommen. Somit ist in einer bestimmten radialen Richtung von der Drehachse 9 des Lichtschalters aus jeweils in der ersten 13a, zweiten 13b und dritten Blendewandung 13c entweder eine Ausnehmung 17 oder ein lichtundurchlässige Abschnitt 19 der Blendewandung 13a, b, c positioniert. Die Ausnehmungen 17 sind lichtdurchlässig, wobei das Material der Blendewandungen 13 selbst lichtundurchlässig ist. Es ist weiterhin eine Leiterplatte 21 gezeigt, die mit Befestigungsstifte 23 befestigt ist. Die Leiterplatte 21 wird mit Kontaktstiften 25 elektrisch mit einer nicht gezeigten Kommunikationsschnittstelle des Drehschalters 1 verbunden.

Weiterhin sind drei Sender-/Empfänger Paare 5a, b, c gezeigt. Die Sender-/Empfänger Paare 5a, b, c sind an der unteren Seite der Leiterplatte 21 befestigt bzw. angeordnet. Die Sender-/Empfänger Paare 5a, b, c weisen jeweils einen Sender und einen Empfänger auf, wobei der Sender und der Empfänger jeweils einander gegenüber angeordnet sind, sodass eine Lichtübertragungsstrecke 27 zwischen dem Sender und dem Empfänger gebildet ist. Die Sender-/Empfänger Paare sind so positioniert, dass die Lichtübertragungsstrecke 27 jeweils einer der Blendewandungen 13a, b, c überbrückt. Je nach Drehstellung also wird die Lichtübertragungsstecke 27 eines Sender-/Empfänger Paares 5 durch die Blendewandung 13 entweder blockiert oder freigelassen. Zum Beispiel, wenn ein Nutzer den Drehknauf 3 so dreht, dass eine Ausnehmung 17 zwischen dem Sender und dem Empfänger positioniert ist, so bleibt die Lichtübertragungsstrecke 27 frei und ein Lichtsignal vom Sender wird von dem Empfänger empfangen. Ein entsprechendes elektrisches Signal wird dann mittels der Leiterplatte 21 an eine Auswerteeinheit geleitet. Wird in einer bestimmten Drehstellung ein lichtundurchlässiger Abschnitt 19 einer Blendewandung 13 zwischen Sender und Empfänger positioniert, so kommt dementsprechend kein Lichtsignal an den Empfänger an.

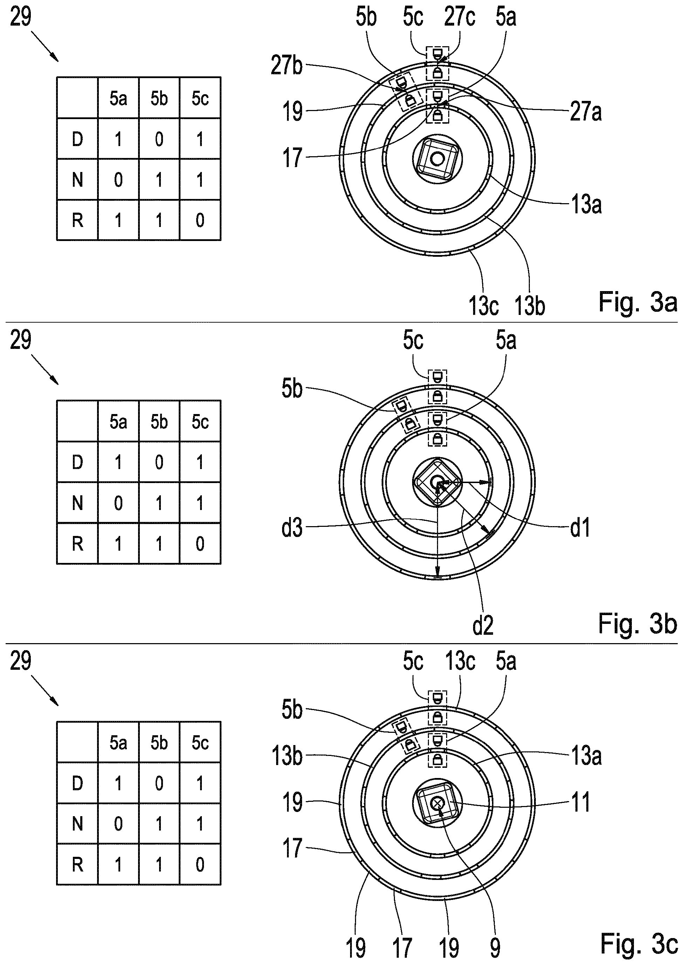

Die Sender-/Empfänger Paare 5 bzw. das Lichtblendeelement 15 sind so ausgestaltet, dass für jede bestimmte Drehstellung eine eindeutige Kombination von Empfängersignalen erzeugt wird. Dies wird zusammen mit Fig. 3 näher beschrieben. Die Teilfiguren 3a, 3b und 3c zeigen jeweils unterschiedliche Drehstellungen D, N, R einer Ausgestaltung eines Drehschalters 1. Hierbei werden nur das Lichtblendeelement 15 und die jeweiligen Sender-/Empfänger Paare 5 gezeigt. Zusätzlich in Figur 3a, 3b und 3c sind Wertetabellen 29 gezeigt. Die Wertetabellen 29 zeigen für das erste Sender-/Empfänger Paar 5a für drei verschiedene Drehstellungen D, N und R das jeweilige elektrische Signal, das vom Empfänger erzeugt wird. Hierbei wird eine 1 gezeigt, wenn ein Lichtsignal von dem Empfänger empfangen wird und eine 0 wird angegeben, wenn kein Lichtsignal ankommt. Somit kann ermittelt werden, ob sich eine Ausnehmung 17 der Blendewandung 13 oder ein lichtundurchlässiger Abschnitt 19 der Blendewandung 13 gerade zwischen Sender und Empfänger befindet. Für die Sensor-/Empfänger Paare 5b und 5c werden die entsprechenden elektrischen Signalwerte analog angegeben.

In Figur 3a wird eine erste Drehstellung D gezeigt. In der ersten Drehstellung D ist eine Ausnehmung 17 der ersten Blendewandung 13a zwischen dem ersten Empfänger-/Sender Paar 5a bzw. in der Lichtübertragungsstrecke 27a des ersten Sender-/Empfänger Paares angeordnet. Das dritte Sender-/Empfänger Paar 5c ist in Bezug auf die Drehachse 9 radial hinter dem ersten Sender-/Empfänger Paar angeordnet. Die äußerste Blendewandung 13c weist hier wie bei der innersten Blendewandung 13a eine Ausnehmung 17 auf, so dass ein Lichtsignal von dem dritten Sender an den dritten Empfänger ankommt. Somit wird in der Wertetabelle 29 eine 1 eingetragen. In dieser ersten Drehstellung D ist ein lichtundurchlässiger Abschnitt 19 der mittleren Blendewandung 13b so positioniert, dass es die Lichtübertragungsstrecke 27b des zweiten Sender-/Empfänger Paares 5b unterbricht. Somit ist eine 0 in der Wertetabelle 29 an dieser Stelle eingetragen. Das zweite Sender-/Empfänger Paar 5b ist radial versetzt zu dem ersten Sender-/Empfänger Paar 5a angeordnet. Die Sender-/Empfänger Paare 5a, b, c sind auf dieser Weise kompakt an einer Seite des Drehschalters 1 gruppiert. Somit muss die Leiterplatte 21 nur diesen Teilbereich des Drehschalters 1 abdecken.

In Fig. 3b ist das erste Sender-/Empfänger Paar 5a durch die innerste Blendewandung 13a blockiert. Das zweite Sender-/Empfänger Paar 5b ist dagegen freigelassen, so dass ein Lichtsignal von dem zweiten Sender an den zweiten Empfänger ankommt. In der Wertetabelle ist dementsprechend eine 1 zu finden. Bei dem dritten Paar 5c ist es ebenfalls so, dass sich eine Ausnehmung 19 nicht in der Lichtübertragungsstrecke 27c befindet, so dass bei dem dritten Sender-/Empfänger Paar 5c in der zweiten Drehstellung N auch eine 1 eingetragen ist. Die Sender-/Empfänger Paare 5 sowie das Lichtblendeelement 15 sind so ausgestaltet, dass sich für jede Drehstellung D, N, R eine eindeutige Kombination von durchgelassenen bzw. blockierten Lichtübertragungsstrecken 27 ergibt.

Eine Wertetabelle 29, wie in Fig. 3a, b, c gezeigt, kann beispielsweise in einem Datenspeicher in einer Auswerteeinheit des Drehschalters 1 hinterlegt werden. Bei der Erfassung der Drehstellung D, N, R des Drehschalters 1 können die von dem Sender-/Empfänger Paar 5 erzeugten Signale somit durch einen Vergleich mit dieser hinterlegten Wertetabelle ausgebildet werden. Die Drehstellung D, N, R wird somit ermittelt. In der dritten Drehstellung R werden Signale von dem ersten und zweiten Sender 5a, b durchgelassen und das dritte Sender-/Empfänger Paar 5c wird blockiert. Die somit erzeugte Kombination von empfangenden Signalen können als Bitfolge betrachtet werden. Es ist somit möglich ein Hamming-Abstand zwischen der jeweiligen Drehstellungen D, N, R repräsentierenden Bitfolgen zu analysieren. In dieser Ausgestaltung eines Drehstellers 1 ist der Hamming-Abstand zwischen den unterschiedlichen Drehstellung repräsentierenden Bitfolgen immer 2. Es wäre denkbar mehrere Sender-/Empfänger Paare 5 zu vorzusehen, um größere Hamming-Abstände zu erreichen. Es wäre weiterhin denkbar mehrere Blendewandungen 13 bzw. Blendewandungen 13 die nicht nur lichtdurchlässig 17 oder lichtundurchlässigere Abschnitte 19 aufweisen, sondern beispielsweise nur bestimmte Lichtfrequenzen durchlassen zu verwenden und somit die mögliche Anzahl von Kombinationen zu vergrößern und somit ein größerer Hamming-Abstand zwischen einzelnen Drehstellungen D, N, R zu erreichen. Somit kann die Sicherheit eines Drehschalters 1 insbesondere für die Verwendung als Gangwahlschalter erhöht werden.

### Bezugszeichen

- 1: Drehschalter
- 3: Drehstellungserfassungsvorrichtung
- 5a,b,c: erstes, zweites drittes Sender-/Empfänger Paar
- 7a,b: erster, zweiter Gehäuseteil
- 9: Drehachse
- 11: Kunststoffteil
- 13a, b, c: erste, zweite, dritte Blendewandungen
- 15: Lichtblendeelement
- 17: Ausnehmung
- 19: lichtundurchlässiger Abschnitt
- 21: Leiterplatte
- 23: Befestigungsstifte
- 25: Kontaktstifte
- 27: Lichtübertragungsstrecke
- 29: Wertetabelle
- D, R, N: Drehstellungen

## Patentansprüche

1. Drehschalter (1) für ein Kraftfahrzeug mit einem Drehknauf (3) und einer Drehstellungserfassungsvorrichtung, wobei die Drehstellungserfassungsvorrichtung zumindest ein erstes lichtbasiertes Sender-/Empfänger Paar (5a), ein zweites lichtbasiertes Sender-/Empfänger Paar (5b) und ein Lichtblendeelement (15) aufweist, wobei die lichtbasierte Sender-/Empfänger Paare (5a, b) jeweils einen Lichtsender und einen gegenüber von dem Lichtsender angeordneten Lichtempfänger aufweisen, so dass jeweils eine Lichtübertragungsstrecke (27) zwischen dem Sender und dem Empfänger gebildet ist, wobei das Lichtblendeelement (15) dazu dient, der Transmissionseigenschaften der jeweiligen Lichtübertragungsstrecken (15) anhand Drehstellung (D, N, R) des Drehschalters (1) zu bestimmen, wobei das Lichtblendeelement (15) eine erste konzentrisch zu der Drehachse (9) des Drehschalter (1) angeordnete Blendewandung (13a) aufweist, wobei die Blendewandung (13a) zumindest teilweise die Drehachse (9) einkreist, und dazu dient die Transmissionseigenschaft der ersten Lichtübertragungsstrecke (27a) des ersten lichtbasierten Sender-/Empfänger Paars (5a) je nach Drehstellung (D, N, R) zu bestimmen, **dadurch gekennzeichnet, dass** die Sender-/Empfänger Paare (5a, b) so angeordnet sind, dass ein erster Abstand (d1), der sich zwischen einem Mittepunkt der ersten Lichtübertragungsstrecke (27a) des ersten Paares (5a) und einer Drehachse (9) des Drehschalters (1) erstreckt, von einem zweiten Abstand (d2), der sich zwischen einem Mittepunkt der zweiten Lichtübertragungsstrecke (27b) des zweiten Paars (5b) und der Drehachse (9) erstreckt, sich unterscheidet,
und dass das Lichtblendeelement (15) eine zweite konzentrisch zu der Drehachse (9) des Drehschalters (1) angeordnete Blendewandung (13b) aufweist, wobei die zweite Blendewandung (13b) zumindest teilweise die Drehachse (9) einkreist, und im Vergleich zu der ersten Blendewandung (13a) unterschiedlich von der Drehachse (9) entfernt angeordnet ist, und dazu dient die Transmissionseigenschaft der zweiten Lichtübertragungsstrecke (27b) des zweiten lichtbasierten Sender-/Empfänger Paars (5b) je nach Drehstellung (D, N, R) zu bestimmen,
und dass die erste und die zweite Blendewandungen (13a, 13b) mit dem Drehknauf (3) gedreht werden.

2. Drehschalter (1) nach Anspruch 1, wobei das Lichtblendeelement (15) relativ beweglich zu den lichtbasierten Sender-/Empfänger Paaren ausgestaltet ist, wobei die Relativbewegung eine Rotationsbewegung ist.

3. Drehschalter (1) nach Anspruch 1 oder 2, wobei das erste Sender-/Empfänger Paar (5a) und das zweite Sender-/Empfänger Paar (5b) entlang unterschiedlich radialen Richtungen in Bezug auf die Drehachse (9) angeordnet sind.

4. Drehschalter (1) nach Anspruch 1 oder 2, **dadurch gekennzeichnet, dass** das erste Sender-/Empfänger Paar (5a) im Wesentlichen radial zwischen dem zweiten Sender-/Empfänger Paar (5c) und der Drehachse (9) angeordnet ist.

5. Drehschalter (1) nach zumindest einem der vorhergehenden Ansprüche, wobei mindestens einer der Blendewandungen (13a, b, c) abschnittsweise unterschiedliche Transmissionseigenschaften aufweist, insbesondere wobei die mindestens eine Blendewandung (13a, b, c) alternierend lichtdurchlässige Abschnitte (17) und lichtundurchlässig Abschnitte (19) aufweist, wobei die Abschnitte (17, 19) dazu dienen die Transmissionseigenschaften der jeweiligen Lichtübertragungsstrecken (27a, b, c) entsprechend verschiedene Drehstellungen (D, N, R) zu beeinflussen.

6. Drehschalter (1) nach Anspruch 5, **dadurch gekennzeichnet, dass** das Lichtblendeelement (15) dazu ausgestaltet ist, die Transmissionseigenschaften der jeweiligen Lichtübertragungsstrecken (27a, b, c) zu bestimmen, in dem die erste und zweite Blendewandungen (13a, b, c) die Lichtübertragungsstrecken (27a, b, c) anhand der Drehstellung (D, N, R) so blockieren oder freilassen, dass jede Drehstellung (D, R, N) anhand einer eindeutigen Kombination von geöffneten oder blockierten Lichtübertragungsstrecken (27a, b, c) identifizierbar ist.

7. Drehschalter (1) nach Anspruch 6, wobei jede eindeutige Kombination mit einer Bitfolge repräsentierbar ist, **dadurch gekennzeichnet, dass** der Hamming-Abstand zwischen der jeweiligen, kombinationsrepräsentierenden Bitfolgen einen Wert von mindestens 2 beträgt.

8. Drehschalter (1) nach zumindest einem der vorhergehenden Ansprüche, wobei der Lichtbasierte Sender dazu ausgelegt ist ein infrarotes Lichtsignal zu senden und wobei der lichtbasierte Empfänger dazu ausgelegt ist das infrarote Lichtsignal zu empfangen.

9. Vorrichtung für die Wahl eines Gangs in einem Kraftfahrzeug, wobei die Vorrichtung ein Drehschalter (1) nach zumindest einem der vorhergehenden Ansprüche aufweist.

## Claims

1. Rotary switch (1) for a motor vehicle, comprising a rotary knob (3) and a rotary position detection device, wherein the rotary position detection device has at least one first light-based transmitter/receiver pair (5a), a second light-based transmitter/receiver pair (5b), and a light screening element (15), wherein the light-based transmitter/receiver pairs (5a, b) have in each case a light transmitter and a light receiver arranged opposite the light transmitter such that in each case a light transmission path (27) is formed between the transmitter and the receiver, wherein the light screening element (15) serves for determining the transmission properties of the respective light transmission paths (15) on the basis of the rotary position (D, N, R) of the rotary switch (1), wherein the light screening element (15) has a first screening wall (13a), arranged concentric to the rotational axis (9) of the rotary switch (1), wherein the screening wall (13a) at least partially encircles the rotational axis (9), and serves for determining the transmission property of the first light transmission path (27a) of the first light-based transmitter/receiver pair (5a), depending on the rotational position (D, N, R), **characterized in that** the transmitter/receiver pairs (5a, b) are arranged such that a first distance (d1), which extends between a midpoint of the first light transmission path (27a) of the first pair (5a) and a rotational axis (9) of the rotary switch (1), differs from a second distance (d2), which extends between a midpoint of the second light transmission path (27b) of the second pair (5b) and the rotational axis (9),
and **in that** the light screening element (15) has a second screening wall (13b), arranged concentric to the rotational axis (9) of the rotary switch (1), wherein the second screening wall (13b) at least partially encircles the rotational axis (9), and is arranged at a different distance from the rotational axis (9) in comparison with the first screening wall (13a), and serves for determining the transmission property of the second light transmission path (27b) of the second light-based transmitter/receiver pair (5b), on the basis of the rotational position (D, N, R),
and **in that** the first and second screening walls (13a, 13b) are turned with the rotary knob (3).

2. Rotary switch (1) according to Claim 1, wherein the light screening element is designed as movable in relation to the light-based transmitter/receiver pairs, wherein the relative movement is a rotational movement.

3. Rotary switch (1) according to Claim 1 or 2, wherein the first transmitter/receiver pair (5a) and the second transmitter/receiver pair (5b) are arranged along different radial directions with respect to the rotational axis (9).

4. Rotary switch (1) according to Claim 1 or 2, **characterized in that** the first transmitter/receiver pair (5a) is arranged substantially radially between the second transmitter/receiver pair (5c) and the rotational axis (9).

5. Rotary switch (1) according to at least one of the preceding claims, wherein at least one of the screening walls (13a, b, c) has different transmission properties in certain portions, in particular wherein the at least one screening wall (13a, b, c) has alternately light-transmissive portions (17) and light-nontransmissive portions (19), wherein the portions (17, 19) serve for influencing the transmission properties of the respective light transmission paths (27a, b, c) in accordance with different rotational positions (D, N, R).

6. Rotary switch (1) according to Claim 5, **characterized in that** the light screening element (15) is designed for determining the transmission properties of the respective light transmission paths (27a, b, c), **in that** the first and second screening walls (13a, b, c) close or open the light transmission paths (27a, b, c) on the basis of the rotational position (D, N, R) such that each rotational position (D, R, N) can be identified on the basis of a unique combination of opened or closed light transmission paths (27a, b, c).

7. Rotary switch (1) according to Claim 6, wherein each unique combination can be represented by a bit sequence, **characterized in that** the Hamming distance between the respective bit sequences representing combinations has a value of at least 2.

8. Rotary switch (1) according to at least one of the preceding claims, wherein the light-based transmitter is designed for transmitting an infrared light signal and the light-based receiver is designed for receiving the infrared light signal.

9. Device for selecting a gear in a motor vehicle, wherein the device has a rotary switch (1) according to at least one of the preceding claims.

## Revendications

1. Commutateur rotatif (1) pour un véhicule automobile, comprenant un bouton rotatif (3) et un dispositif de détection de position de rotation, le dispositif de détection de position de rotation présentant au moins une première paire émetteur/récepteur basée sur la lumière (5a), une deuxième paire émetteur/récepteur basée sur la lumière (5b) et un élément cache-lumière (15), les paires émetteur/récepteur basées sur la lumière (5a, b) présentant respectivement un émetteur de lumière et un récepteur de lumière disposé à l'opposé de l'émetteur de lumière de façon à former respectivement un trajet de transmission de lumière (27) entre l'émetteur et le récepteur, dans lequel l'élément cache-lumière (15) sert à déterminer les propriétés de transmission des trajets de transmission de lumière (15) respectifs à l'aide d'une position de rotation (D, N, R) du commutateur rotatif (1), dans lequel l'élément cache-lumière (15) présente une première paroi de cache (13a) disposée de manière concentrique à l'axe de rotation (9) du commutateur rotatif (1), la paroi de cache (13a) entourant au moins en partie l'axe de rotation (9), et sert à déterminer la propriété de transmission du premier trajet de transmission de lumière (27a) de la première paire émetteur/récepteur basée sur la lumière (5a) en fonction de la position de rotation (D, N, R), **caractérisé en ce que** les paires émetteur/récepteur (5a, b) sont disposées de telle sorte qu'une première distance (d1) qui s'étend entre un centre du premier trajet de transmission de lumière (27a) de la première paire (5a) et un axe rotatif (9) du commutateur rotatif (1) est différente d'une deuxième distance (d2) qui s'étend entre un centre du deuxième trajet de transmission de lumière (27b) de la deuxième paire (5b) et l'axe de rotation (9),
et **en ce que** l'élément cache-lumière (15) présente une deuxième paroi de cache (13b) disposée de manière concentrique à l'axe de rotation (9) du commutateur rotatif (1), dans lequel la deuxième paroi de cache (13b) entoure au moins en partie l'axe de rotation (9) et est disposée à une distance différente de l'axe de rotation (9) en comparaison avec la première paroi de cache (13a) et sert à déterminer la propriété de transmission du deuxième trajet de transmission de lumière (27b) de la deuxième paire émetteur/récepteur basée sur la lumière (5b) respectivement en fonction de la position de rotation (D, N, R),
et **en ce que** la première et la deuxième paroi de cache (13a, 13b) sont amenées à tourner par le bouton rotatif (3).

2. Commutateur rotatif (1) selon la revendication 1, dans lequel l'élément cache-lumière (15) est réalisé pour être mobile relativement par rapport aux paires émetteur/récepteur basées sur la lumière, le mouvement relatif étant un mouvement de rotation.

3. Commutateur rotatif (1) selon la revendication 1 ou 2, dans lequel la première paire émetteur/récepteur (5a) et la deuxième paire émetteur/récepteur (5b) sont disposées le long de directions radiales différentes par rapport à l'axe de rotation (9).

4. Commutateur rotatif (1) selon la revendication 1 ou 2, **caractérisé en ce que** la première paire émetteur/récepteur (5a) est disposée de manière substantiellement radiale entre la deuxième paire émetteur/récepteur (5c) et l'axe de rotation (9).

5. Commutateur rotatif (1) selon au moins l'une des revendications précédentes, dans lequel au moins l'une des parois de cache (13a, b, c) présente par endroits des propriétés de transmission différentes, en particulier dans lequel ladite au moins une paroi de cache (13a, b, c) présente en alternance des sections (17) laissant passer la lumière et des sections (19) ne laissant pas passer la lumière, les sections (17, 19) servant à influencer les propriétés de transmission des trajets de transmission de lumière (27a, b, c) respectifs selon différentes positions de rotation (D, N, R).

6. Commutateur rotatif (1) selon la revendication 5, **caractérisé en ce que** l'élément cache-lumière (15) est configuré pour déterminer les propriétés de transmission des trajets de transmission de lumière (27a, b, c) respectifs **en ce que** la première et la deuxième paroi de cache (13a, b, c) bloquent ou exposent les trajets de transmission de lumière (27a, b, c) à l'aide de la position de rotation (D, N, R) de telle sorte que chaque position de rotation (D, R, N) peut être identifiée à l'aide d'une combinaison univoque de trajets de transmission de lumière (27a, b, c) ouverts ou bloqués.

7. Commutateur rotatif (1) selon la revendication 6, dans lequel chaque combinaison univoque peut être représentée par une chaîne de bits, **caractérisé en ce que** la distance de Hamming entre les chaînes de bits respectives représentant la combinaison est une valeur d'au moins 2.

8. Commutateur rotatif (1) selon au moins l'une des revendications précédentes, dans lequel l'émetteur basé sur la lumière est conçu pour émettre un signal lumineux infrarouge et le récepteur basé sur la lumière est conçu pour recevoir le signal lumineux infrarouge.

9. Dispositif permettant de sélectionner une vitesse dans un véhicule automobile, dans lequel le dispositif présente un commutateur rotatif (1) selon au moins l'une des revendications précédentes.
